# EUROPÄISCHE PATENTSCHRIFT

(11) **EP 0 766 081 B1**
(45) Veröffentlichungstag und Bekanntmachung des Hinweises auf die Patenterteilung: **11.06.2003**
(21) Anmeldenummer: 95118516.4
(22) Anmeldetag: 24.11.1995
(51) Int. Cl.: G01N 21/64, G06K 7/12

(54) **Optoelektronischer Lumineszenztaster**
Optoelectronic luminescence detector
Détecteur de luminescence opto-électronique

(30) Priorität: 26.09.1995 DE 19535735
(43) Veröffentlichungstag der Anmeldung: 02.04.1997
(73) Patentinhaber: SICK AG, 79183 Waldkirch (DE)
(72) Erfinder: Loos, Werner, D-79359 Riegel (DE); Hauptmann, Axel, D-79183 Waldkirch (DE)
(74) Vertreter: Ludewigt, Christoph

(56) Entgegenhaltungen:
- EP-A- 0 256 970
- EP-A- 0 475 675
- DE-C- 3 242 219
- US-A- 4 642 526

## Beschreibung

Die Erfindung bezieht sich auf einen optoelektronischen Lumineszenztaster.

Lumineszenztaster werden überall dort eingesetzt, wo Steuermarken oder dergleichen fluoreszierende Markierungen mit hoher Betriebssicherheit erkannt und sicher auch von anderen Markierungen unterschieden werden müssen. Bei solchen Lumineszenztastern wird als Lichtquelle eine im Ultraviolett-Bereich abstrahlende Leuchtstoffröhre verwendet. Die Wellenlänge des abgestrahlten Lichtes beträgt hierbei etwa 360 nm. Im Ultraviolettbereich weisen diese Leuchtstoffröhren die für den Betrieb ausreichende, notwendige Lichtintensität auf. Ein solcher Lumineszenztaster ist beispielsweise aus der US 4 642 526 bekannt.

Zur Lichtstrahlerzeugung ist bei der Ultraviolett(UV)-Röhre eine lichtdichte Ummantelung mit einer mittigen Austrittsöffnung vorgesehen. Bei der Austrittsöffnung sind zur Vermeidung von Streulicht Seitenblenden angeordnet und zur Fokussierung ist noch zwischen der UV-Röhre und dem Farbteiler-Spiegel eine Optik, insbesondere eine Sammellinse vorgesehen.

Diese durch die Bauform der UV-Röhre bedingten Maßnahmen zur Strahlerzeugung und Bündelung sind vergleichsweise aufwendig und reduzieren den Wirkungsgrad erheblich. So steht für den auf den Spiegel auftreffenden Lichtstrahl nur etwa ein Fünftel der erzeugten Lichtenergie zur Verfügung.

Zum Betreiben der UV-Röhre sind vergleichsweise aufwendige Schaltungsmaßnahmen erforderlich, unter anderem, da sie mit Hochspannung betrieben werden muß.

Das von einer fluoreszierenden Oberfläche reflektierte Licht ist langwelliger als das gesendete UV-Licht, wobei die Wellenlänge des reflektierten Lichtes bei einer Sendewellenlänge von etwa 360 nm im Bereich von etwa 420 nm bis 750 nm liegt. Problematisch ist hierbei, daß in diesem Bereich auch Lichtreflektionen von Stellen am Erfassungsgegenstand auftreten können, die unerwünscht sind. Beim Einsatz der Lumineszenztaster in der Holzverarbeitung sind dies beispielsweise Harzstellen, die etwa im Blaubereich reflektieren. Um Fehldetektionen zu vermeiden, ist es dementsprechend erforderlich, ein Rotfilter vor dem Empfänger des Tasters vorzusehen, der den blauen Bereich sperrt.

Problematisch ist auch der Betrieb der UV-Röhre bei niedrigen Umgebungstemperaturen, da hierbei die Strahlungsintensität stark nachläßt.

Aus der EP-A-475 675 ist ein optisches Lesegerät bekannt, bei dem als Lichtquelle unter anderem eine LED (light emitting diode) eingesetzt wird. Mit dieser Lichtquelle ist das optische Lesegerät zum Scannen von Schriften oder als Barcode-Leser einsetzbar. Weiterhin ist der Einsatz als Lesegerät für fluoreszierende Marken vorgesehen, wobei aber eine UV-Lampe als Lichtquelle vorgesehen ist.

Aufgabe der vorliegenden Erfindung ist es, einen Lumineszenztaster der eingangs erwähnten Art zu schaffen, der einen vereinfachten, kostengünstigeren Aufbau aufweist, betriebssicher und robust ist und der auch bei niedrigen Temperaturen problemlos einsetzbar ist. Außerdem sollen der Wirkungsgrad und die Lebensdauer verbessert sein und es sollen auch schnellere Bewegungsabläufe erfaßbar sein.

Die erfindungsgemäße Lösung dieser Aufgabe besteht in den Merkmalen des Anspruches 1.

Bei dieser Lichtquelle sind keinerlei Abschirm- und Bündelungsmaßnahmen mehr erforderlich, was den Platzbedarf erheblich reduziert und was auch die Verluste kleinhält. So tritt bei dieser Punktlichtquelle praktisch kein Streulicht auf und das von der Lichtquelle abgestrahl teLicht stehtpraktischvollständigdirekt als gebündelter Lichtstrahl zur Verfügung.

Die Strom- beziehungsweise Leistungsaufnahme der Lichtquelle beträgt nur noch einen Bruchteil, insbesondere 5 bis 10% der Leistungsaufnahme einer bisher verwendeten UV-Leuchtstoffröhre und die Lebensdauer der Leuchtdiode ist mindestens um den Faktor 10 größer als bei einer UV-Röhre.

Durch die im blauen Bereich vorgesehene Sende-Wellenlänge und die entsprechende Ausbildung des Farbteiler-Spiegels, können Störreflexionen und Fluoreszensen im blauen Bereich vermieden werden. Rotfilter, die den blauen Bereich herausfiltern, vor dem Empfänger für das reflektierte Licht sind somit nicht mehr erforderlich, was insgesamt mit zu einer Aufwand-, Platz- und Kostenreduzierung beiträgt.

Die Leuchtdiode ist direkt mit einer entsprechenden Ansteuereinrichtung für einen gepulsten Betrieb verbunden. Aufwendige Netzteile sind somit nicht mehr erforderlich.

Die Leuchtdiode wird mit einer sehr hohen Modulationsfrequenz betrieben. Daraus resultiert, daß auch sehr schnelle Bewegungsabläufe erfaßbar sind. Außerdem kann diese Lichtquelle und damit der erfindungsgemäße Lumineszenztaster auch bei niedrigen Temperaturen ohne Einbuße seiner Meßempfindlichkeit eingesetzt werden.

Insgesamt kann mit der vorgesehenen Punktlichtquelle ein Lumineszenztaster mit sehr geringem Aufwand und sehr kleinen Abmessungen aufgebaut werden. Praktische Versuche haben gezeigt, daß trotz des gravierend reduzierten Aufwandes die Eigenschaftes des Lumineszenztasters gegenüber herkömmlichen Lumineszenztastern noch verbessert sind.

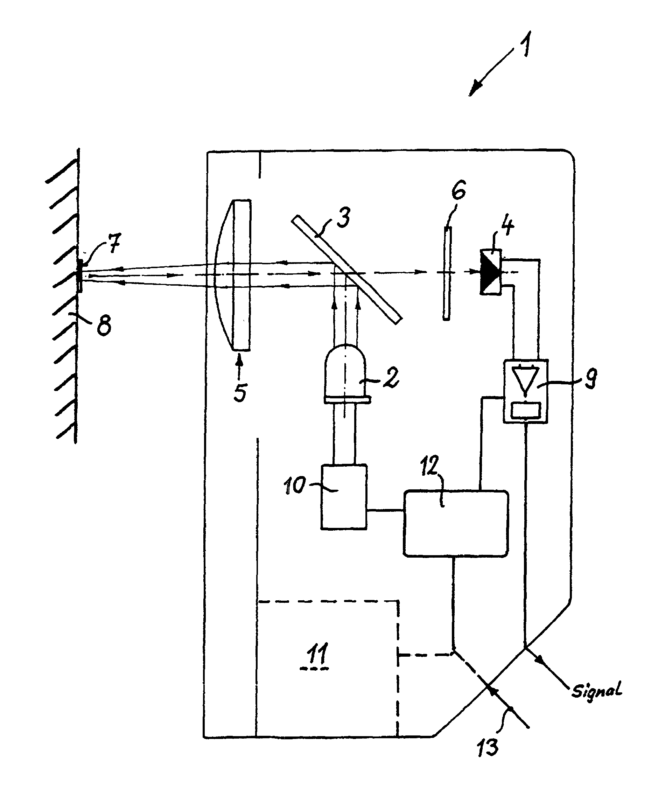

Ausgestaltungen der Erfindung sind in den Unteransprüchen aufgeführt. Nachstehend ist die Erfindung mit ihren wesentlichen Einzelheiten anhand der Zeichnung noch näher erläutert.

Die einzige Figur zeigt:
eine schematisierte Seitenansicht eines Lumineszenztasters mit seinen wesentlichen Komponenten.

Ein in der Figur gezeigter Lumineszenztaster 1 dient zur Erfassung von fluoreszierenden Gegenständen, wobei Licht mit einer Wellenlänge von etwa 450 nm abgestrahlt wird und das reflektierte Fluoreszenzlicht empfangen und ausgewertet wird.
Im wesentlichen weist der Lumineszenztaster eine Lichtquelle 2, einen Farbteiler-Spiegel 3 sowie einen Empfänger 4 auf. Zusätzlich ist in der Figur noch als abbildende Optik ein Objektiv 5, das im Ausführungsbeispiel durch eine Sammellinse gebildet ist, vorgesehen. Zwischen dem durch eine Fotozelle gebildeten Empfänger 4 und dem Farbteiler-Spiegel 3 befindet sich noch ein Farb- oder Interferenzfilter 6, das in bestimmten Anwendungsfällen zur Selektion von Fluoreszenzmaterialien mit unterschiedlichen Wellenlängen einsetzbar ist. Dieses Filter ist jedoch nicht unbedingt erforderlich.

Als Lichtquelle 2 ist eine im blauen Lichtbereich bei vorzugsweise etwa 450 nm abstrahlende Leuchtdiode vorgesehen, die direkt auf den Farbteiler-Spiegel 3 abstrahlt. Da diese Leuchtdiode bereits als Punktlichtquelle ausgebildet ist, erübrigen sich Zusatzmaßnahmen zur Lichtstrahlformung, insbesondere zur Bündelung, unter anderem Abschirmungen und eine Sammellinse.
Das auf den Farbteiler-Spiegel auftreffende Licht wird von diesem reflektiert und über das Objektiv 5 abgestrahlt. Trifft dieser Strahl auf ein zu detektierendes, fluoreszierendes Material 7 auf einem Abtastgegenstand 8, so wird aufgrund der Anregung zur Fluoreszenz Licht mit einer gegenüber der Sendelicht-Wellenlänge längeren Wellenlänge reflektiert und gelangt über das Objektiv 5 auf den Farbteiler-Spiegel 3. Dieser ist so ausgebildet, daß er Licht mit der Sendelicht-Wellenlänge reflektiert, das längerwellige, vom zu detektierenden Material 7 reflektierte Licht jedoch durchläßt. Dieses durchgelassene Licht gelangt dann zum Empfänger 4, der mit einer Auswerteeinrichtung 9 verbunden ist. Diese gibt ein Steuersignal zur Weiterverarbeitung aus.
Die Leuchtdiode 2 ist an eine Ansteuereinrichtung 10 angeschlossen, über die sie mit vorzugsweise gepulstem Strom versorgt wird.
Da die Stromaufnahme insgesamt sehr gering ist und für den gesamten Lumineszenztaster beispielsweise 30 Milliampere beträgt, könnte beispielsweise auch eine mobile Stromquelle, insbesondere die in der Zeichnung strichliniert angedeutete Batterie 11 vorgesehen sein. Andererseits besteht aber auch die Möglichkeit, die Stromversorgung 12 über einen Netzanschluß 13 zu speisen und gegebenenfalls auch einen netzgepufferten Batteriebetrieb vorzusehen. Insgesamt ist somit für die Stromversorgung nur ein äußerst geringer Aufwand erforderlich, so daß auch der Platzbedarf wesentlich reduziert ist. Dadurch eröffnet sich die Möglichkeit, sehr kleine Lumineszenztaster herstellen zu können. Durch den erheblich verringerten Aufwand können die Kosten etwa um den Faktor 10 gegenüber bisherigen Geräten verringert werden.
Insgesamt steht somit ein Lumineszenztaster zur Verfügung, der bei hoher Betriebssicherheit und geringem Bauvolumen robust ist, einen hohen Wirkungsgrad und eine erheblich verbesserte Lebensdauer aufweist. Darüber hinaus besteht auch die Möglichkeit, die Leuchtdiode mit einer wesentlich höheren Modulationsfrequenz zu betreiben und dadurch auch sehr schnelle Bewegungsabläufe erfassen zu können.

## Patentansprüche

1. Optoelektronischer Lumineszenztaster (1), mit Lichtquelle (2) und Empfänger (4) für von einer fluoreszierenden Markierung reflektiertes, von der Lichtquelle ausgesandtes Licht und mit einem Farbteiler-Spiegel (3), der sich zwischen Lichtquelle und Empfänger befindet und für eine Wellenlänge von etwa 420 nm bis 480 nm reflektierend und für mehr als 480 nm durchlässig ist, wobei die Lichtquelle eine im blauen Lichtbereich bei etwa 420 nm bis etwa 480 nm gebündelt abstrahlende, eine Punktlichtquelle bildende Leuchtdiode ist, wobei die Leuchtdiode (2) mit ihrer Abstrahlseite ohne zusätzliche Einrichtungen zur Lichtstrahlformung und Lichtfilterung direkt und unmittelbar dem Farbteiler-Spiegel (3) zugewandt angeordnet ist, und wobei eine mit der Leuchtdiode (2) verbundene Ansteuereinrichtung (10) mit einem Modulator für einen Pulsbetrieb der Leuchtdiode (2) mit gepulstem Strom vorgesehen ist, wobei die Pulsfrequenz wenigstens 10 kHz beträgt.

2. Lumineszenztaster nach Anspruch 1, **dadurch gekennzeichnet, daß** der Farbteiler-Spiegel (3) für einen Wellenlängenbereich um etwa 650 nm durchlässig ist.

3. Lumineszenztaster nach einem der Ansprüche 1 oder 2, **dadurch gekennzeichnet, daß** der Lumineszenztaster eine Netzstromversorgung und/oder eine vorzugsweise im Gerätegehäuse befindliche Batterie (11) als Stromquelle aufweist.

## Claims

1. Optoelectronic light scanner (1) working on a luminescent basis, with a light source (2) und a light receiver (4) for light emitted by the light source and reflected by a fluorescent mark and with a color separation mirror (3), which is located between the light source and the receiver and which is reflective for a wavelength of about 420 nm to 480 nm and transparent for more than 480 nm, whereby the light source is a light emitting diode constituting a point light source which emits focussed blue light of about 420 nm to 480 nm, whereby the light emitting diode (2) is directly arranged with regard to the color separation mirror (3) with its emitting side facing directly and without additional devices for light beam forming and filtering the color separation mirror and whereby there is provided a control device (10) connected to the light emitting diode (2) and the control device comprises a modulator for a pulsed mode of the light emitting diode (2) with pulsed current, whereby the puls frequency is at least 10 kHz.

2. Optoelectronic light scanner according to claim 1, **characterized in that** the color separation mirror (3) is transparent for a wavelength range of about 650 nm.

3. Optoelectronic light scanner according to claim 1 or 2, **characterized in that** the scanner comprises a power supply and/or a battery (11), preferably located in a scanner housing, as a current source.

## Revendications

1. Détecteur de luminescent opto-électronique (1) comportant une source lumineuse (2) et un récepteur (4) de lumière émis par l'émetteur de lumière et reflété par un marquage fluorescent et comportant un miroir de diviseur de couleurs (3) qui se trouve entre la source lumineuse et le récepteur, reflété pour une longueur d'onde d'environ 420 nm à 480 nm et perméable pour plus que 480 nm, dont la source lumineuse est une source lumineuse de point formant une diode lumineuse, qui rayonne en lié ensemble de lumière bleu d'environ 420 nm à environ 480 nm, la diode lumineuse est disposée directement avec son côté de rayonnement sans installations supplémentaires à la formation de rayon lumineux et au filtrage de lumière vers le miroir de diviseur de couleurs et une installation de contrôle (10) est prévue avec un modulateur pour un fonctionnement de pulsation de la diode lumineuse (2) avec un courant de pulsation, dont la fréquence de pulsation s'élève au moins 10 kHz.

2. Détecteur de luminescent selon la revendication 1, **caractérisé en ce que** le miroir de diviseur de couleurs (3) est perméable pour un secteur d' une longueur d'onde d'environ 650 nm.

3. Détecteur de luminescent selon une des revendications 1 ou 2, **caractérisé en ce que** le détecteur luminescent comprenant une alimentation en courant d'un réseau électrique et/ou une batterie (11) qui se trouve de préférence à l'entérieur d'appareil.
